# EUROPÄISCHE PATENTSCHRIFT

(11) **EP 2 795 396 B1**
(45) Veröffentlichungstag und Bekanntmachung des Hinweises auf die Patenterteilung: **12.06.2019**
(21) Anmeldenummer: 12812217.3
(22) Anmeldetag: 19.12.2012
(51) Int. Cl.: G02F 1/1335, G02F 1/1339, G02F 1/1333

(54) **ANZEIGE MIT EINEM ELEKTROOPTISCHEN ANZEIGEMODUL**
DISPLAY WITH AN ELECTRO-OPTICAL DISPLAY MODULE
DISPOSITIF D'AFFICHAGE MUNI D'UN MODULE D'AFFICHAGE ÉLECTRO-OPTIQUE

(30) Priorität: 20.12.2011 DE 102011089266
(43) Veröffentlichungstag der Anmeldung: 29.10.2014
(73) Patentinhaber: Continental Automotive GmbH, 30165 Hannover (DE)
(72) Erfinder: MARQUARDT, Helmut, 64297 Darmstadt (DE); PAWUSCH, Wolfgang-Peter, 65239 Hochheim (DE); WEDEL, Hans, 64367 Mühltal (DE)
(86) Internationale Anmeldenummer: PCT/EP2012/076056
(87) Internationale Veröffentlichungsnummer: WO 2013/092647

(56) Entgegenhaltungen:
- DE-A1- 10 131 296
- DE-A1- 19 705 536
- US-A1- 2007 040 798

## Beschreibung

Die Erfindung betrifft eine Anzeige mit einem elektrooptischen Anzeigemodul, wobei das elektrooptische Anzeigemodul eine Anzeigefläche aufweist, mit einer zwischen der Anzeigefläche und einem möglichen Beobachter der Anzeigefläche angeordneten lichtdurchlässigen Abdeckung, wobei die lichtdurchlässige Abdeckung auf die Anzeigefläche mittels eines lichtdurchlässigen Klebers gebondet ist.

Elektrooptische Anzeigemodule sind beispielsweise Flüssigkristalldisplays oder organische Leuchtdiodendisplays, die beispielsweise als Anzeigen oder kombinierte Anzeige- und Eingabeflächen, beispielsweise in Mobiltelefonen Verwendung finden.

Die US 2007/0040798 A1 beschreibt eine elektrooptische Anzeige, bei der eine Folie mit einem elektrooptischen Display derart verklebt ist, dass das elektrooptische Display zwei Substrate aufweist, wobei das einem Beobachter abgewandte zweite Substrat größer als das dem Beobachter zugewandte erste Substrat ausgestaltet ist und die Folie das erste Substrat bedeckt und mit dem zweiten Substrat derart verklebt wird, dass das elektrooptische Display gegen Umwelteinflüsse versiegelt wird.

Die DE 101 31 296 A1 beschreibt das Verkleben einer Folie im Randbereich einer Anzeige.

Die DE 197 05 536 A1 beschreibt den Aufbau eines Zifferblattes, welches mehrere übereinander angeordnete verschiedenfarbige Druckschichten aufweist.

Um die elektrooptischen Anzeigemodule zu schützen, werden sie mit einer lichtdurchlässigen Abdeckung zusätzlich abgedeckt, die auf die Anzeigeflächen der elektrooptischen Anzeigemodule mittels eines Klebers gebondet sind und dadurch das elektrooptische Anzeigemodul insbesondere mechanisch schützen. Derartige Anzeigen werden auch zunehmend in Automobilen, beispielsweise zur Herstellung von vollständigen Kombinationsinstrumenten verwendet. Wenn hierbei Zierelemente oder Informationselemente wie beispielsweise Skalenringe auf dieser Abdeckung angebracht sind, entstehen unerwünschte Spalte oder Fugen.

Aufgabe der Erfindung ist es, vorgenannte Anzeigen mit Zierelementen oder Informationselementen anzugeben, bei denen keine unerwünschten Spalten oder Fugen auftreten. Diese Aufgabe wird durch **eine Anzeige mit den Merkmalen des Patentanspruchs 1** gelöst Hierdurch können durch diese dreidimensionale Ausgestaltung Zierelemente wie beispielsweise Skalenringe realisiert werden, ohne dass unerwünschte Spalten oder Fugen auftreten. **Da** die Abdeckung nur in Teilbereichen auf die Anzeigefläche gebondet ist, ist es
möglich, zwischen der lichtdurchlässigen Abdeckung und der Anzeigefläche zusätzliche Bauteile vorzusehen. Wenn die lichtdurchlässige Abdeckung in den Teilbereichen der Anzeigefläche, die von einem möglichen Beobachter wahrnehmbar ist, gebondet ist, wird zum Einen erreicht, dass die von dem Beobachter wahrnehmbare Anzeigefläche ein einheitliches Aussehen hat, zum anderen ist es möglich, in den Bereichen der Abdeckung, die dreidimensional, beispielsweise als Zierring oder Skalenring ausgebildet sind, zusätzliche Bauteile unter diesen Zierringen oder Skalenringen anzubringen, beispielsweise um diese separat beleuchten zu können.

Besonders einfach und preiswert ist die Abdeckung herzustellen, wenn sie aus einer Folie besteht. Die dreidimensionale Gestaltung der Folie lässt sich besonders einfach durch ein Tiefziehen der Folie realisieren. Die dreidimensionalen Ausgestaltungen der Folien wirken besonders gut, wenn sie bedruckt sind. Bei einem Bedrucken der Folie ist es sinnvoll, diese vor dem Tiefziehen zu bedrucken, da dann die Bedruckung wesentlich einfacher ist. Wenn die Folie auf der dem möglichen Beobachter abgewandten Seite bedruckt ist, ist diese Bedruckung vor einem mechanischen Abrieb, beispielsweise bei einer Verwendung der Anzeige als Eingabegerät, geschützt.

Wenn in dem Kleber Abstandhalter verteilt sind, kann ein konstanter Abstand zwischen der Abdeckung und der Anzeigefläche realisiert werden. Einen besonders optisch ansprechenden Eindruck macht die Anzeige, wenn die Abstandhalter transparent sind und den gleichen Brechungsindex wie der Kleber aufweisen: Dann sind die Abstandhalter bei einer normalen Betrachtung der Anzeige nicht wahrnehmbar. Wenn die Abstandhalter gleichförmig ausgestaltet sind, wird der Abstand noch genauer eingestellt. Dies trifft ebenfalls dann zu, wenn benachbarte Abstandhalter zueinander den gleichen Abstand aufweisen. Besonders bevorzugt ist es, wenn die Abstandhalter einen Durchmesser von 0,4 mm aufweisen. Diese können beispielsweise als Kugeln mit diesem Durchmesser oder als Fäden mit diesem Durchmesser ausgestaltet sein. Eine zusätzliche Beleuchtung der Anzeige lässt sich dadurch realisieren, dass zwischen der Anzeigefläche und der Abdeckung Lichtleiter angeordnet sind. Hierdurch kann beispielsweise eine zusätzliche Beleuchtung der Zier- oder Skalenelemente realisiert werden. Wenn die Lichtleiter in Richtung der Abdeckung über eine Lichtauskoppelfläche Licht auskoppeln, kann beispielsweise an bestimmten Stellen der dreidimensionalen Ausgestaltung wie beispielsweise dem Skalenring eine individuelle Beleuchtung erfolgen, um so beispielsweise einen bestimmten feststehenden oder einstellbaren Wert auf der Skala hervorzuheben. Wenn oberhalb der Lichtauskoppelfläche ein durchleuchtbares Symbol an der Abdeckung angeordnet ist, kann durch die Beleuchtung dieses Symboles eine zusätzliche Information, wie beispielsweise eine Warnung, dargestellt werden.

Die Erfindung wird nachfolgend anhand der Figuren näher erläutert. Es zeigen:
- Fig. 1: ein elektrooptisches Anzeigemodul nach dem Stand der Technik,
- Fig. 2: ein Ausführungsbeispiel einer besonders bevorzugten erfindungsgemäßen Anzeige mit einer nur teilweise dargestellten Abdeckung,
- Fig. 3: eine Aufsicht auf ein weiteres Ausführungsbeispiel einer erfindungsgemäßen Anzeige,
- Fig. 4: eine erste mögliche Ausgestaltung des Schnittes D - D aus Fig. 3,
- Fig. 5: eine zweite mögliche Ausgestaltung des Schnittes D - D aus Fig. 3.

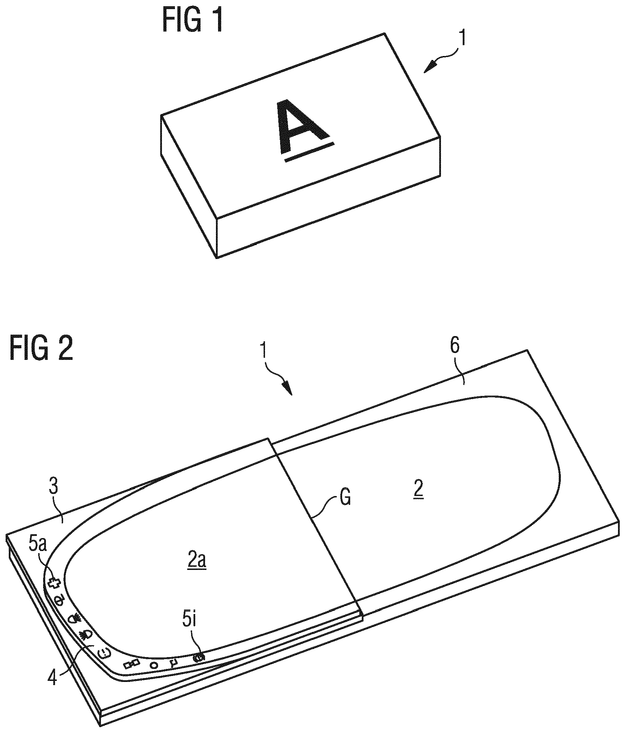

Das elektrooptische Anzeigemodul in Fig. 1 ist beispielsweise als Flüssigkristalldisplay ausgestaltet und weist eine Anzeigefläche A auf, die üblicherweise nahezu eine vollständige Seite des Anzeigemoduls bedeckt. Dieses Anzeigemodul kann beispielsweise als Punktmatrixdisplay ausgestaltet sein, es sind aber auch andere elektrooptische Anzeigemodule möglich.

Im ersten Ausführungsbeispiel der erfindungsgemäßen Anzeige in Fig. 2 erkennt man das elektrooptische Anzeigemodul 1 mit der Anzeigefläche A und eine nur zur Hälfte dargestellte Abdeckung 3 mit einer dreidimensionalen Struktur 4. In der als Zierrahmen ausgebildeten dreidimensionalen Struktur 4 sind durchleuchtbare Symbole 5a bis 5i dargestellt. Diese Symbole 5a bis 5i können beispielsweise durch ein Bedrucken der Abdeckung 3 realisiert sein. Hierbei kann der Druck so ausgestaltet sein, dass die Symbole nur dann wahrnehmbar sind, wenn sie entsprechend durchleuchtet werden. Dies ist beispielsweise dadurch möglich, dass auf die aufgedruckten Symbole in Richtung eines möglichen Beobachters eine weitere Beschichtung aufgetragen wird, die bei reinem Auflicht die Symbole abdeckt, die aber bei einer entsprechenden Hinterleuchtung das von den Symbolen ausgesandte Licht zu einem entsprechenden Beobachter passieren lässt. Weiterhin erkennt man in dem nicht durch die Abdeckung 3 abgedeckten Bereich, dass die Anzeigefläche A in zwei Bereiche aufgeteilt ist, nämlich einmal in den Bereich, auf den der Kleber 2 aufgetragen ist, und in den nicht gebondeten Bereich 6, auf den kein Kleber aufgetragen ist. Da die Anzeige und damit auch die Abdeckung 3 symmetrisch zu der Grenzlinie G der Abdeckung 3 aufgebaut ist, kann man erkennen, dass der Bereich der Abdeckung 3, die mit dem Kleber 2 auf die Anzeigefläche gebondet ist, eben ausgestaltet ist und der Bereich, der nicht gebondet ist, die dreidimensionale Struktur 4 aufweist. Die Grenzlinie G ist nur in der vorliegenden Figur wegen der nur teilweisen Darstellung der Abdeckung 3 wahrnehmbar, bei dem erfindungsgemäßen Gerät bedeckt die Abdeckung 3 die Anzeigefläche A vollständig. Da die dreidimensionale Struktur und die außerhalb der dreidimensionalen Struktur liegenden Bereiche der Abdeckung 3 bedruckt sind, ist nur der Bereich der Anzeigefläche für einen Beobachter wahrnehmbar, auf den der Kleber 2 aufgetragen ist und der mit der Abdeckung 3 mittels des Klebers verbunden ist. Hierbei müssen sich diese Flächen nicht genau abgrenzen. Vielmehr ist es durchaus möglich, auch noch innerhalb des Zierrahmens die Abdeckung zu bedrucken, damit ein sauberer Übergang realisiert werden kann und so verhindert wird, dass ein möglicher Beobachter auch ungebondete Flächen der Anzeigefläche A wahrnehmen kann.

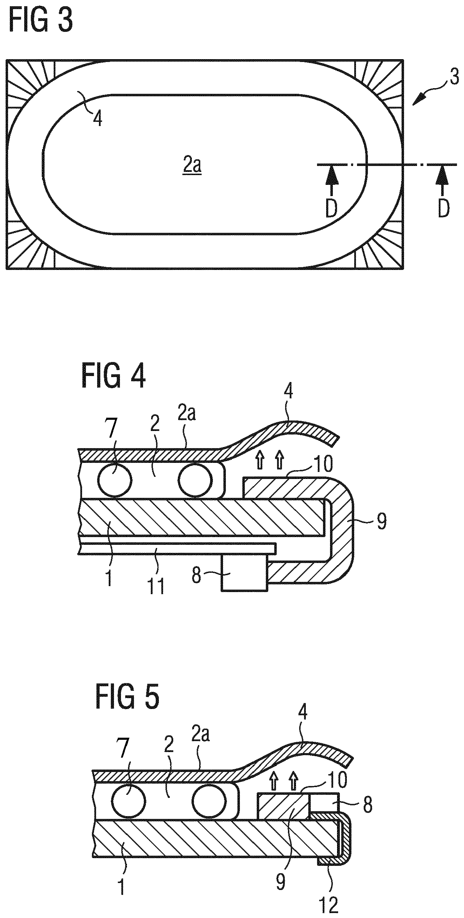

Das Ausführungsbeispiel der erfindungsgemäßen Anzeige in Fig. 3 ist ähnlich aufgebaut wie das Ausführungsbeispiel in Fig. 2, deshalb werden für gleiche Bauteile gleiche Bezugszeichen verwendet. Man erkennt die Abdeckung mit einer dreidimensionalen Struktur 4 in Form eines Rahmens und den Bereich 2a der Abdeckung 3, der mittels des Klebers gebondet ist. Außerhalb des Rahmens wäre es prinzipiell möglich, die vorhandene Anzeigefläche A zu nutzen, es wird aber meistens aus ästhetischen Gründen darauf verzichtet werden. Deshalb wird die Abdeckung 3 in diesen Bereichen vorteilhafterweise bedruckt.

In Fig. 4 erkennt man ein elektrooptisches Modul 1, die Abdeckung 3 mit den Bereichen 2a und 4, Kleber 2 mit Abstandshaltern 7, eine LED 8, einen Lichtleiter 9 mit einer Auskoppelfläche 10 und eine Leiterplatte 11, auf der die LED 8 angeordnet ist. Die Abdeckung 3 ist im Bereich 2a mittels des Klebers 2 auf das elektrooptische Modul 1 gebondet. Zwischen der dreidimensionalen Struktur 4 und dem elektrooptischen Modul 1 ist Raum vorhanden, so dass noch der Lichtleiter 9 Platz findet. So kann von der LCD 8 Licht in den Lichtleiter 9 eingekoppelt werden und über die Auskoppelfläche 10 ausgekoppelt werden. So kann die dreidimensionale Struktur beleuchtet werden, insbesondere dann, wenn sich in ihr ein Symbol 5a bis 5i aus Fig. 2 befindet. So ist es möglich, diese Symbole sehr hell zu beleuchten. Grundsätzlich wäre es auch möglich, das elektrooptische Modul selbst zu verwenden, beispielsweise bei einem LCD könnte man die entsprechenden Pixel unterhalb der dreidimensionalen Struktur 4 entsprechend durchschalten und so auch eine Beleuchtung realisieren. Da aber beispielsweise eine LCD sehr große Lichtverluste aufweist, können auf diese Art und Weise nur relativ geringe Leuchtstärken realisiert werden oder aber es müsste in diesen Bereichen eine sehr große Lichtstärke angewendet werden, die durch das LCD geschickt würde.

Eine zweite Möglichkeit der direkten Beleuchtung der dreidimensionalen Struktur zeigt Fig. 5. Hier ist nur ein relativ kurzer Lichtleiter 9 mit einer Auskoppelfläche 10 vorhanden, in die eine LED 8 Licht einkoppelt, die ebenfalls zwischen den elektrooptischen Modul 1 und der dreidimensionalen Struktur 4 angeordnet ist. Die LED 8 erhält ihre elektrische Energie über eine Flex-Leiterplatte 12.

Die Erfindung ist auch leicht abänderbar. Beispielsweise kann auch der Bereich 2a der Abdeckung 3, der auf das Anzeigemodul 1 gebondet ist, mit einem lichtdurchlässigen Lack lackiert sein oder mit einer sonstigen Beschichtung versehen werden, um ein möglichst einheitliches Gesamtbild der Anzeige zu realisieren. Hierbei ist aber zu beachten, dass die zusätzliche Beschichtung zusätzliches Licht adsorbiert, so dass bei einer geforderten Mindesthelligkeit der Anzeige die entsprechende Beleuchtung der Anzeige verstärkt werden muss.

## Patentansprüche

1. Anzeige mit einem elektrooptischen Anzeigemodul (1), wobei das elektrooptische Anzeigemodul eine Anzeigefläche (A) aufweist, mit einer zwischen der Anzeigefläche (A) und einem möglichen Beobachter der Anzeigefläche (A) angeordneten lichtdurchlässigen Abdeckung (3), wobei die lichtdurchlässige Abdeckung (3) auf die Anzeigefläche mittels eines Klebers (2) gebondet ist, **dadurch**
**gekennzeichnet,**
**dass die Anzeigefläche (A) einen ersten Bereich aufweist, auf dem der Kleber (2) aufgetragen ist und einen zweiten Bereich(6) aufweist, auf dem kein Kleber(2) aufgetragen ist,**
**dass** die Oberfläche der lichtdurchlässigen Abdeckung (3) im zweiten Bereich (6) dreidimensional ausgestaltet ist.

2. Anzeige nach Patentanspruch **1, dadurch gekennzeichnet, dass** die lichtdurchlässige Abdeckung (3) in den Teilbereichen (2a) der Anzeigefläche (A), die von einem möglichen Beobachter wahrnehmbar ist, gebondet ist.

3. Anzeige nach einem der vorstehenden Patentansprüche, **dadurch gekennzeichnet, dass** die lichtdurchlässige Abdeckung (3) aus einer Folie besteht.

4. Anzeige nach Patentanspruch **3, dadurch gekennzeichnet, dass** die Folie tiefgezogen ist.

5. Anzeige nach Patentanspruch **3** oder **4, dadurch gekennzeichnet, dass** die Folie bedruckt ist.

6. Anzeige nach Patentanspruch **5, dadurch gekennzeichnet, dass** die Folie auf der dem möglichen Beobachter abgewandten Seite bedruckt ist.

7. Anzeige nach einem der vorstehenden Patentansprüche, **dadurch gekennzeichnet, dass** in dem Kleber (2) Abstandhalter (7) verteilt sind.

8. Anzeige nach Patentanspruch **7, dadurch gekennzeichnet dass** die Abstandhalter (7) transparent sind und den gleichen Brechungsindex wie der Kleber (2) aufweisen.

9. Anzeige nach Patentanspruch **7** oder **8, dadurch gekennzeichnet dass** die Abstandhalter (7) gleichförmig ausgestaltet sind.

10. Anzeige nach Patentanspruch **7, 8** oder **9, dadurch gekennzeichnet, dass** benachbarte Abstandhalter (7) zueinander den gleichen Abstand aufweisen.

11. Anzeige nach Patentanspruch **7, 8, 9** oder **10, dadurch gekennzeichnet, dass** die Abstandhalter (7) einen Durchmesser von 0,4 mm aufweisen.

12. Anzeige nach einem der vorstehenden Patentansprüche, **dadurch gekennzeichnet, dass** zwischen der Anzeigefläche (A) und der lichtdurchlässigen Abdeckung (3) Lichtleiter (9) angeordnet sind.

13. Anzeige nach Patentanspruch **12, dadurch gekennzeichnet, dass** die Lichtleiter (9) in Richtung der lichtdurchlässigen Abdeckung (3) über eine Lichtauskoppelfläche (10) Licht auskoppeln.

14. Anzeige nach Patentanspruch **13, dadurch gekennzeichnet, dass** oberhalb der Lichtauskoppelfläche (10) ein durchleuchtbares Symbol (5a - 5i) an der lichtdurchlässigen Abdeckung (3) angeordnet ist.

## Claims

1. Display with an electrooptical display module (1), having a display area (A), having a transparent cover (3) arranged between the display area (A) and a possible observer of the display area (A), the transparent cover (3) being bonded onto the display area (A) by means of an adhesive (2), **characterized in that** the display area (A) has a first region, in which the adhesive (2) is applied, and has a second region (6), to which no adhesive (2) is applied, **in that** the surface of the transparent cover (3) is configured in a three-dimensional fashion in the second region (6).

2. Display according to Patent Claim 1, **characterized in that** the transparent cover (3) is bonded in the subareas (2a) of the display area (3), which can be perceived by a possible observer.

3. Display according to one of the preceding patent claims, **characterized in that** the transparent cover (3) consists of a film.

4. Display according to Patent Claim 3, **characterized in that** the film is deep-drawn.

5. Display according to Patent Claim 3 or 4, **characterized in that** the film is printed.

6. Display according to Patent Claim 5, **characterized in that** the film is printed on the side averted from the possible observer.

7. Display according to one of the preceding patent claims, **characterized in that** spacers (7) are distributed in the adhesive (2).

8. Display according to Patent Claim 7, **characterized in that** the spacers (7) are transparent and have the same refractive index as the adhesive (2).

9. Display according to Patent Claim 7 or 8, **characterized in that** the spacers (7) are uniformly configured.

10. Display according to Patent Claim 7, 8 or 9, **characterized in that** adjacent spacers (7) have the same spacing from one another.

11. Display according to Patent Claim 7, 8, 9 or 10, **characterized in that** the spacers (7) have a diameter of 0.4 mm.

12. Display according to one of the preceding patent claims, **characterized in that** light guides (9) are arranged between the display area (A) and the transparent cover (3) .

13. Display according to Patent Claim 12, **characterized in that** the light guides (9) decouple light via a light decoupling area (10) in the direction of the transparent cover (3).

14. Display according to Patent Claim 13, **characterized in that** a backlit symbol (5a - 5i) is arranged on the transparent cover (3) above the light decoupling area (10) .

## Revendications

1. Dispositif d'affichage muni d'un module d'affichage électro-optique (1), dans lequel le module d'affichage électro-optique comporte une surface d'affichage (A), comprenant un revêtement transparent (3) agencé entre la surface d'affichage (A) et un observateur potentiel de la surface d'affichage (A), dans lequel le revêtement transparent (3) est collé à la surface d'affichage au moyen d'un adhésif (2),
**caractérisé en ce que** la surface d'affichage (A) présente une première zone sur laquelle l'adhésif (2) est appliqué et présente une seconde zone (6) sur laquelle aucun adhésif (2) n'est appliqué,
et **en ce que** la surface du revêtement transparent (3) dans la seconde région (6) est configurée de manière tridimensionnelle.

2. Dispositif d'affichage selon la revendication 1, **caractérisé en ce que** le revêtement transparent (3) est collé dans les zones partielles (2a) de la surface d'affichage (A), qui est perceptible par un observateur potentiel.

3. Dispositif d'affichage selon l'une des revendications précédentes, **caractérisé en ce que** le revêtement transparent (3) est constitué d'un film.

4. Dispositif d'affichage selon la revendication 3, **caractérisé en ce que** le film est thermoformé.

5. Dispositif d'affichage selon la revendication 3 ou 4, **caractérisé en ce que** le film est imprimé.

6. Dispositif d'affichage selon la revendication 5, **caractérisé en ce que** le film est imprimé sur la face tournée à l'oppose de l'observateur potentiel.

7. Dispositif d'affichage selon l'une des revendications précédentes, **caractérisé en ce que** des entretoises (7) sont réparties dans l'adhésif (2).

8. Dispositif d'affichage selon la revendication 7, **caractérisé en ce que** les entretoises (7) sont transparentes et présentent le même indice de réfraction que l'adhésif (2).

9. Dispositif d'affichage selon la revendication 7 ou 8, **caractérisé en ce que** les entretoises (7) sont de conception uniforme.

10. Dispositif d'affichage selon la revendication 7, 8 ou 9, **caractérisé en ce que** des entretoises (7) adjacentes présentent les mêmes distances les unes des autres.

11. Dispositif d'affichage selon la revendication 7, 8, 9 ou 10, **caractérisé en ce que** les entretoises (7) présentent un diamètre de 0,4 mm.

12. Dispositif d'affichage selon l'une des revendications précédentes, **caractérisé en ce que** des guides de lumière (9) sont disposés entre la surface d'affichage (A) et le revêtement transparent (3).

13. Dispositif d'affichage selon la revendication 12, **caractérisé en ce que** les guides de lumière (9) découplent la lumière dans la direction du revêtement transparent (3) par l'intermédiaire d'une surface de découplage de lumière (10).

14. Dispositif d'affichage selon la revendication 13, **caractérisé en ce qu'**un symbole translucide (5a - 5i) est disposé sur le revêtement transparent (3) au-dessus de la surface de découplage de lumière (10).
